# EUROPEAN PATENT APPLICATION

(11) **EP 4 756 378 A1**
(43) Date of publication of application: **10.06.2026**
(21) Application number: 24218181.6
(22) Date of filing: 06.12.2024
(51) Int. Cl.: G01C 21/20

(54) **METHOD AND DEVICE FOR DETERMINING OBJECT LOCATIONS AT SEA USING AN UNCREWED SURFACE VESSEL**

(71) Applicant: FNV IP B.V., 2264 SG Leidschendam (NL)
(72) Inventor: Lafontaine, Stijn Cornée, 2264 SG Leidschendam (NL); Hendrix, Julius Louis Anselmus Maria, 2264 SG Leidschendam (NL); Laporte, Jonathan René Janick, 2264 SG Leidschendam (NL); Dias Bispo Carvalho, Diego, 2264 SG Leidschendam (NL); Brekelmans, Christiaan Theodorus Wijnand, 2264 SG Leidschendam (NL)
(74) Representative: FNV Intellectual Property

(57) **Abstract**

The present invention relates to methods and devices for providing navigation parameters for navigation of an uncrewed surface vessel at sea, wherein the navigation parameters comprise a surface location of an object at sea. The surface location of the object can be calculated based on identified pixels in a 2D image in addition to imaging device parameters including orientation information. Unlocking insights from Geo-Data, the present invention relates to improvements in sustainability and environmental developments: together we create a safe and liveable world.

## Description

### FIELD OF THE INVENTION

The present disclosure generally relates to the field of uncrewed marine vehicles (UMVs). Unlocking insights from Geo-Data, the present invention further relates to improvements in sustainability and environmental developments: together we create a safe and liveable world.

### BACKGROUND OF THE INVENTION

Examples of UMVs are uncrewed surface vessels (USVs) and remotely operated vehicles (ROVs). These vehicles are used for various maritime applications, including subsea geo-data surveying, environment monitoring, maritime facility, and subsea infrastructure maintenance. USVs operate on the surface of a body of water, while ROVs may more typically be deployed for either water-surface or underwater operations, most typically underwater operations.

UMVs are configured to be operable without any human crew onboard. UMVs may be remotely operated or controlled from a remote base station on land (e.g., a remote operating centre) at sea or in the air. The UMVs can also be configured to operate autonomously, for example to autonomously navigate at sea on the surface and/or sub-sea. The UMVs can operate under a combination of autonomous control and remote control. The UMV can switch between remote operation and autonomous operation. When operating autonomously, the UMVs may advantageously operate independently or with minimal (remote) human intervention.

One of the advantages of UMVs is their ability to operate in harsh and hazardous environments where a human presence is not ideal or not possible. This capability is particularly valuable for tasks such as deep-sea survey, environmental monitoring, and underwater infrastructure inspection in extreme conditions. Furthermore, remote operations in marine environments are particularly advantageous because it reduces exposure of human staff to hazardous maritime surroundings. In addition, without staff on board, the size and weight of the vessel can be dramatically reduced, which leads to much more efficient operations, with reduced emissions. Remote and/or autonomous operations thus increase safety and reduce environmental impact.

Enhancing the autonomy of UMVs may be desirable for several reasons. When human intervention is minimized, the autonomy can lead to increased productivity, reduced operational costs, and/or extended operation periods. Therefore, it is desirable to improve the ability of UMVs to operate autonomously. This may further reduce needs for base station intervention as remote control and needs for base stations to remain in constant contact with UMVs, for example reducing needs for deployment and/or presence of mother vessels or aircraft for remote control, instruction or monitoring of UMVs.

Advanced autonomy is desired for the UMVs. However, for safety reasons, an option for human intervention to take-over the control of the UMVs is usually implemented for safety reasons.

In maritime environments, it is important for any vessel to avoid collision with other objects. This also applies to UMVs, for both remote and/or for autonomous operation. In particular for uncrewed surface vessels (USVs) navigating the surface of a body of water, it is desirable to accurately determine the locations, identities (vessel, lighthouse, buoy, etc.) and status (underway, at anchor, carrying out operations) of objects to avoid collisions and navigate safely and effectively.

Unlike land-based environments, object detection in maritime environments may be particularly challenging because of the complex and dynamic conditions. The movement of the vessel, influenced by waves, currents, and wind adds complexity to the task of accurately determining the (relative) locations of objects. Additionally, the sea's surface is constantly changing, making it difficult to rely on static assumptions about the environment.

One of the challenges in object detection for USVs is the hardware and computational complexity involved. Conventional methods for detecting an object's location often involve the use of multiple acquisition units for acquiring data about the surroundings, such as cameras or sensors, which can be costly and complex to implement, especially for USVs, which have limited power resources onboard and no maintenance support at hand. These methods also require significant computational resources and may not be feasible for real-time applications. The integration of multiple sensors not only increases the cost but also adds to the weight and power consumption of the USV, which can be a limiting factor for long-duration underwater operations. Given the importance of environmental awareness for UMVs, it is often necessary to have redundant sensors for safety reasons which also contributes to the cost. Therefore, it is advantageous to minimize the number of required sensors while still maintaining the necessary level of environmental awareness.

The dynamic nature of the maritime environment means that the objects and the USV are constantly moving. This means that it is important to detect objects quickly and accurately, preferably in real-time, so that the USV can adapt to the changing conditions in the environment. The constant movement of the sea surface, influenced by factors such as tides, waves, and currents, creates a highly dynamic and unpredictable environment. This makes it challenging to maintain accurate and reliable object detection over extended periods.

Therefore, there is a need for an object-detection system that is robust, and which can effectively detect object locations in maritime environments in real-time. In other words, a system that may allow fast processing of possibly limited sensor data with on-the-fly decision making to avoid collisions and navigate effectively. Improving the accuracy and reliability of object detection in maritime environments is desired, particularly because of the unique challenges of the maritime environment, including the movement of the vessel and the dynamic nature of the sea surface.

### BRIEF SUMMARY OF THE INVENTION

According to a first aspect, the invention provides a method for providing navigation parameters for the navigation of an uncrewed or unmanned surface vessel (USV) at sea. Navigation of the USV can be controlled by a control unit that calculates a navigation path for the USV and can operate the drive of the USV to drive the USV along the navigation path. The control unit can be configured to calculate the navigation path based on navigation parameters such as objects detected in the surroundings of the USV. The control unit may be configured to provide autonomous drive. The control unit may be configured to allow take over by remote control by humans.

The navigation parameters comprise a surface location of an object at sea. In an embodiment, the surface location of the object is defined with respect to a surface location of the USV. The surface location information can be relative with respect to the USV. The surface location information can indicate the relative location (direction, distance) of an object at the sea surface with respect to the relevant USV. Such relative surface location is also referred to as 'depth information'. The surface location information can also be an objective location for example in a format compliant with internationally recognized geolocation and time information standards, e.g., Global Navigation Satellite System (GNSS), such as Global Positioning System (GPS), Global Navigation Satellite System (GLONASS), Beidou Navigation Satellite System (BDS), and Galileo. Such standards can be used to indicate latitude, longitude, and optionally height information of an object.

In embodiments, the method comprises the steps of acquiring a 2D image using an imaging device of the USV. The 2D image can contain data representing an object in the surroundings of the USV. The imaging device can be any imaging device suitable for acquiring 2D images of the surroundings from the USV, for example, an optical camera (such as an RGB or monochrome camera), a low-light camera for enhanced visibility in poor lighting conditions, or an infrared camera for detecting thermal information as a 2D map.

According to an embodiment, the method further comprises processing the 2D image to identify at least one pixel of interest in the 2D image, wherein the at least one pixel of interest is indicative of the object. The ability to detect objects allows a USV to recognize nearby objects and any risk related to the location/status of the objects. The one or more objects can be any physical object on the surface of the sea including other vessels, buoys, floating debris, and marine life.

According to an embodiment, the method further comprises acquiring parameters comprising an orientation of the imaging device. The orientation of the imaging device can be obtained based on measured data, such as measurements using an inertial measurement unit, using satellite data or can be obtained from the 2D image. In embodiments, the 2D image will have a horizon. By determining the offset of the horizon in the 2D image with respect to a predetermined horizon for that imaging device, parameters with respect to the orientation of the imaging device can be obtained.

In embodiments of the method, the method includes the step of calculating the surface location of the object based on the at least one pixel of interest and the parameters comprising the orientation of the imaging device mounted on the USV. Compact and efficiently locating objects at sea surface, particularly the surface location of the object relative to the surface location of the USV, is achieved by utilizing a 2D imaging device and parameters with additional information related to the imaging device. The surface location of the object, e.g. relative direction and distance from the USV, is derived by a combination of acquiring a 2D image and parameters with respect to orientation of the imaging device that acquired the 2D image.

After recognizing an object and the location of that object with respect to the USV, the USV can safely navigate, for example while avoiding collisions with the identified object. A suitable control unit on the USV can determine a navigation trajectory based on the identified object and the surface location thereof obtained on the basis of the 2D image.

In embodiments, the parameters comprising orientation information of the imaging device refer to the angular position of the imaging device relative to the USV or the sea surface. This includes parameters such as pitch, yaw, and roll. The orientation of the imaging device basically provides information related to from which angle the imaging device was taking the 2D image. Such orientation can be obtained from any suitable method known in the art. For example, if the orientation, location, and height information of the imaging device, relative to the USV, are known, one can derive such information from the USV location/orientation parameters obtained using for example a satellite location device, and/or an inertial measurement unit (IMU). In another example, the imaging device can be located adjacent to a satellite location device and/or an IMU such that the device orientation information can be obtained directly adjacent to the imaging device.

An object at sea can captured on the 2D image that is acquired with the imaging device on the USV. There is at least one pixel of the 2D image depicting the presence of the object. By processing the 2D image, these pixel(s) of interest indicative of the object can be identified. Any suitable image processing technique known in the art can be used. Examples include pattern recognition, scale-invariant feature transform, histogram of oriented gradients, segmentation, template matching, motion analysis, texture/colour analysis, object tracking, statistical modelling, and machine learning techniques such as support vector machines and convolutional neural networks.

After identifying the at least one pixel of interest in the 2D image, the surface location of the object is calculated based on the at least one pixel of interest and the parameters that comprise an orientation of the imaging device. By assuming that the at least one pixel of interest is located at a surface of the sea, a distance between the camera and that object can be calculated using the vertical angle e.g. between horizon and object (in Y-direction of the image). The invention is based on the insight of assuming a flat earth for objects located in the vicinity of the USV. By using the orientation of the image device, e.g. the orientation with respect to the horizon, heaving of the USV can be taken into account and the actual distance can be calculated. The acquired 2D image also provides directional information in the X-direction of the 2D image.

In embodiments, the method calculates the relative direction and distance of the object with respect to the surface location of the USV. This may include mapping the object in a 2D representation of the surroundings of the USV, where the 2D representation contains two or more objects. The 2D representation of the surroundings of the USV can be used by a control unit on the USV to calculate a path for navigating reducing the risk of a collision with one of the objects.

In embodiments, the method includes 2D representations of the surroundings at different moments in time. This allows calculating relative velocities of objects that are located in the surroundings of the USV. The velocity or projected future positions of the objects determined in the 2D image can be used to calculate a risk of collision and can be used to calculate a navigation path away from a risk or a collision.

In embodiments, the information relating to the orientation of the imaging device may comprise a vertical orientation component and a horizontal orientation component. The calculation of the relative direction of the object may be based on the horizontal orientation component, e.g., an orientation with the fixed landmark, e.g. an oil rig with known world coordinates. In embodiments, the calculation of the distance of the object may be based on the vertical orientation component, which can be an angle of the camera device with respect to the horizon.

In embodiments, the method may comprise acquiring ROV parameters comprising at least one parameter related to a remotely operated vehicle (ROV) deployed from the USV as part of the navigation parameters. The ROV parameters may comprise at least one of: (1) an ROV working position, (2) a tether condition, and (3) underwater conditions. In embodiments, the method may include deploying a remotely operated vehicle (ROV) from the USV to water and recovering the ROV from the water to the USV. The ROV parameters can be used as navigation parameters for the USV, and its control unit, to determine when and where to move based on not only the detected objects but also on the situation related to the ROV. In embodiments, the USV navigates in a manner that simultaneously ensures the safe operation of the ROV and the safe navigation of the USV to prevent any collision with the detected object(s).

In embodiments, the method may include acquiring at least one property of the imaging device selected from focal length, sensor size, resolution, aperture size, field of view, calibration parameters, exposure settings, and zoom level. Such additional parameters of the imaging device/image can be used in the calculation step for more accurately detecting the object(s).

In embodiments, the method may include acquiring the parameters comprising the orientation of the imaging device by acquiring a 3D location and/or orientation of the imaging device. Parameters related to the 3D location/orientation may include a pitch, a yaw, and/or a roll of the imaging device relative to the surface of the sea or relative to the USV. In embodiments, the method may include acquiring USV orientation parameters. The 3D location /orientation of the imaging device and the USV position information can be used to enhance the accuracy of the object detection during the calculation step.

In embodiments, parameters comprising the orientation of the camera can be obtained from the 2D image acquired with the camera. A predetermined fixed landmark, such as an oilrig, can be present in the image to provide information about a fixed location. Also, the horizon of the sea in the image can be determined and used to determine an orientation. In case the default orientation of the camera is aligned with the horizon, the horizon shows up as a horizontal line in the 2D acquired image. If the acquired image shows a tilt in the horizon, this points at a sideward tilt, e.g. as a result of heaving, of the camera in operation. In case the sea horizon in the acquired 2D image is moved upward with respect to the default orientation, this is an indication of the camera tilting in the forward direction.

In embodiments, the method may include identifying the at least one pixel of interest in the 2D image. In embodiments, the at least one pixel of interest of an object is identified at an interface between the object and the surface of the sea. The water of the sea is normally straightforward to recognize in a 2D image acquired from the USV, hence the interface between the water and the object(s) can be detected too. Such interface therefore can be identified and be used as a reference point(s) to which the surface location of the object is calculated. Moreover, the pixel at the interface of object and sea is the pixel that is at sea level.

In embodiments, the method may include acquiring the surface location of the USV. In embodiments, the method may include calculating the surface location of the object in accordance with a satellite navigation system format and outputting the surface location of the object in accordance with the satellite navigation system format. The surface location of the USV can be compliant with any globally recognized standard for indication geolocation, such as Global Navigation Satellite System (GNSS). In embodiments, the surface location of the USV can be obtained by using a GNSS device which is configured to receive the surface location of the USV via a wireless communication channel. When such absolute (non-relative) geolocation of the USV is known, the method can calculate the absolute geolocation of the object(s) also in form of absolute geolocation, in addition or instead of a relative surface location of the object(s) with respect to the USV.

In embodiments, the method may further include navigating the USV dependent on the calculated surface location of the object. This allows the USV to autonomously navigate or adjust its course to avoid collisions with detected objects, ensuring safe navigation. The calculated surface location provides real-time data that the USV can use to make informed decision about its path.

In embodiments, the method may include navigating the USV in view of navigational rules. Navigational rules, such as the International Regulations for Preventing Collisions at Sea (COLREGs), provide guidelines for safe maritime navigation. By incorporating these rules into the navigation process, the USV can ensure compliance with established maritime safety standards, reducing the risk of accident and enhancing overall operational safety. The navigational rules can be any set of rules for navigation.

In embodiments, the method may include acquiring surface traffic parameters and navigating further in view of the surface traffic parameters. Surface traffic parameters may be acquired using other sensors or be received via a wireless communication channel from an external source such as a remote-control centre, or a remote operations centre (ROC) or an ROC on, e.g., other vessels, or any other device in communication with the USV. Surface traffic parameters may include information about other vessels, their speed, direction, and proximity, as well as environmental conditions such as weather and sea state, such as currents, wind, and wave motion. By considering these parameters, the USV can optimize its navigation strategy to avoid dangerous areas, congested areas, minimize the risk of collisions, and ensure efficient route planning.

In a second aspect, the invention provides an uncrewed surface vessel (USV) for navigation, such as autonomous navigation. The USV comprises a memory, a processor, an imaging device configured to acquire a 2D image of an object, a control unit configured to acquire parameters comprising an orientation of the imaging device, and a processing unit configured to process the 2D image to identify at least one pixel of interest in the 2D image, wherein the at least one pixel of interest is indicative of an object at sea. The processing unit is further configured to calculate a surface location of the object based on the at least one pixel of interest and the parameters.

In embodiments of the second aspect, the USV can be configured to carry out method steps related to any or any combination of embodiments of the first aspect described above.

In embodiments, the processing unit is further configured to calculate a relative direction and a distance of the object with respect to the surface location of the USV. This allows the USV to determine the precise position of objects in its surroundings, enhancing its ability to navigate safely and avoid collisions.

In embodiments, the control unit is further configured to acquire ROV parameters comprising at least one parameter related to a remotely operated vehicle (ROV) deployed from the USV as navigation parameters. The USV can operate with or without an ROV deployed. This embodiment allows the USV to navigate while taking the ROV into account and at the same time take the detected objects into account as well for safe navigation.

In embodiments, the control unit is configured to navigate the USV in view of the calculated surface location of the object. By continuously updating its course based on real-time object detection data, the USV can navigate safely and efficiently.

In embodiments, the control unit is further configured to acquire surface traffic parameters and to navigate further in view of the surface traffic parameters. By considering information about other vessels and environmental conditions, the USV can optimize its navigation strategy to avoid congested areas and minimize the risk of collisions.

In embodiments, the imaging device includes specifications such as focal length, sensor size, resolution, aperture size, field of view, calibration parameters, exposure settings, and zoom level. The device may also acquire the 3D location and orientation (pitch, yaw, and roll) of the imaging device relative to the sea surface or the USV.

In embodiments, the processing unit is further configured to calculate the relative direction and distance of the object with respect to the USV's surface location. This may include mapping the object in a 2D representation of the USV's surroundings, considering both vertical and horizontal orientation components of the imaging device.

In embodiments, the processing unit is further configured to identify the at least one pixel of interest in the 2D image, where the pixel is indicative of an interface between the object and the surface of the sea.

In embodiments, the processing unit is further configured to calculate the surface location of the object in accordance with a satellite navigation system format and output the surface location of the object in accordance with the satellite navigation system format.

In embodiments, the control unit is further configured to navigate the USV in view of the calculated surface location of the object.

In embodiments, the control unit is further configured to navigate the USV in view of navigational rules.

In embodiments, the control unit is further configured to acquire surface traffic parameters and navigate further in view of the surface traffic parameters.

In embodiments, the control unit is further configured to acquire a set of traffic information related to weather conditions or externally provided traffic information.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these not-to-scale drawings depict only exemplary embodiments of the disclosure and are therefore not to be considered to be limiting of its scope, the principles herein are described and explained with additional specificity and detail through the use of the accompanying drawings in which:
FIG. 1A is a schematic view of an embodiment of a USV at sea detecting an object using an imaging device.
FIG. 1B is a schematic view of an embodiment of a USV at sea having a ROV deployed underwater.
FIG. 2 is a flow chart of a method for providing parameters for navigation of a USV at sea.
FIG. 3 is a top-view schematic from the top of the sea illustrating a USV and two obj ects.
FIG. 4 is a side-view schematic illustrating a USV having an imaging device detecting an object (another vessel in this exemplary case) particularly the interface between the object and the sea surface.
FIG. 5 illustrates an example of 2D image acquired by a USV and identified pixels of interest.
FIG. 6 is a side-view schematic of an imaging device installed in a USV (not shown) having a height and a field of view determined by its orientation and detecting the interface between the object and the sea surface and ray-tracing path.

### DESCRIPTION OF ILLUSTRATIVE EMBODIMENTS

The following is a description of certain embodiments of the invention, given by way of example only and with reference to the drawings.

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure. Thus, the following description and drawings are illustrative and are not to be construed as limiting. Numerous specific details are described to provide a thorough understanding of the disclosure. However, in certain instances, well-known or conventional details are not described in order to avoid obscuring the description. A reference to an embodiment in the present disclosure can be a reference to the same embodiment or any other embodiment. Such references thus relate to at least one of the embodiments herein.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods, and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims or can be learned by the practice of the principles set forth herein. The illustrated embodiments are not to the real scale and only used for illustrating the core teachings for implementing the present invention.

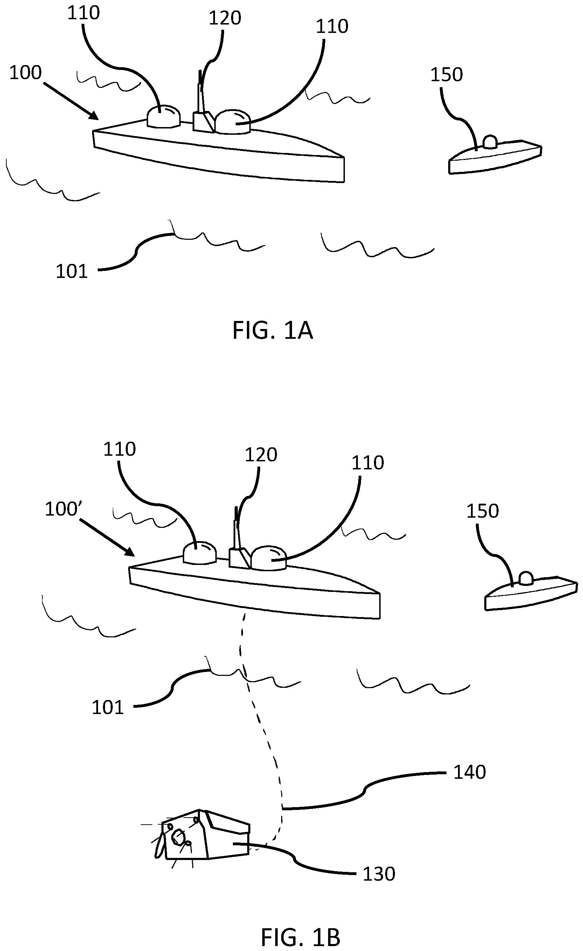

FIG. 1A illustrates a USV 100 at sea surface 101 having at least one imaging device 110 configured to acquire 2D images of the surroundings with respect to the USV. The USV also comprises a communication means 120 for transmitting and receiving data when needed. The USV is configured to detect objects in the surroundings. In this example, one object 150 shown is another vessel 150. The USV has a control unit that can drive the USV in a desired direction. The control unit is configured set a navigation path that avoids a collision. The USV is equipped such that the USV can detect the object 150 for use in determining/adjusting a navigational path safely and efficiently.

FIG. 1B illustrates another example of a USV 100' similar to the USV of FIG. 1A and additionally equipped with a remotely operated vehicle (ROV) 130 deployed under the sea surface 101, wherein the ROV 130 is connected to the USV 100' via an umbilical 140. The umbilical can provide electrical power and/or communicate data between the ROV and the USV. The USV and the ROV are each equipped with propellers and a position controlling means to navigate at the sea surface and underwater respectively. When navigating, compared to the USV 100 of FIG. 1A, the USV 100' of FIG. 1B is configured to be able to also consider the condition of the ROV when planning/adjusting a navigational route.

The USVs 100, 100' shown in FIG. 1A-1B illustrate embodiments of the present invention. The invention can be applied to both situations - with and without an ROV.

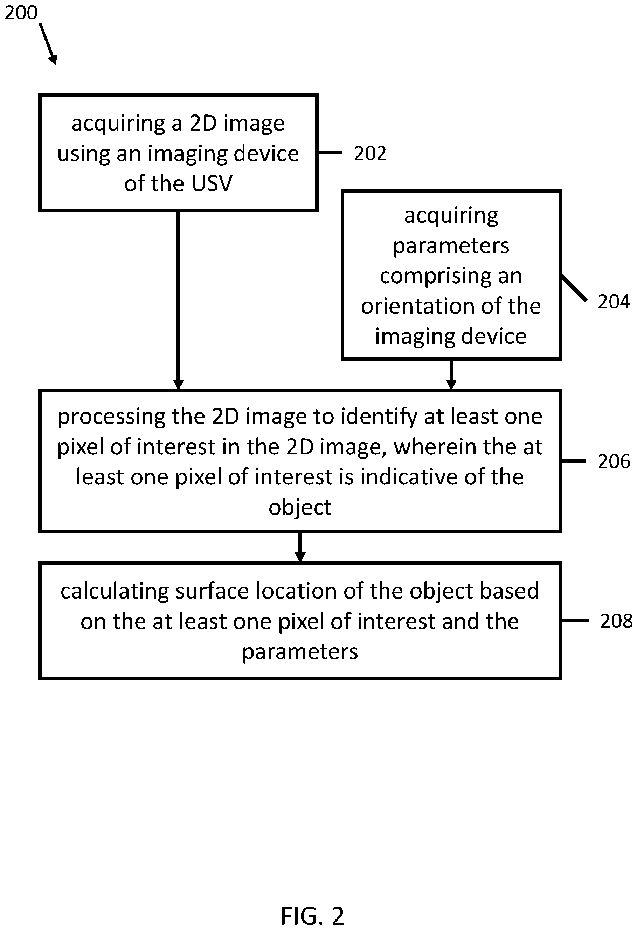

FIG. 2 illustrates a flow chart of a method 200 for providing navigation parameters for a USV based on detected objects. Step 202 relates to acquiring a 2D image of the object using an imaging device of the USV. The 2D image is acquired for obtaining information of the surroundings of the USV. Such acquisition of 2D image can be carried out real-time. The acquisition can be carried out repetitively. In this way, the USV collects information over time relating to the surroundings, in particular objects in the vicinity.

The 2D acquired image can be used for image recognition. Objects captured in the images can be identified. Identified objects can be used as navigation parameters to control the propulsion (speed and direction) of the USV, because contact with objects can lead to significant damage to the USV. Contact is preferably avoided. Decisions for controlling the navigation can be made on the basis of identified objects.

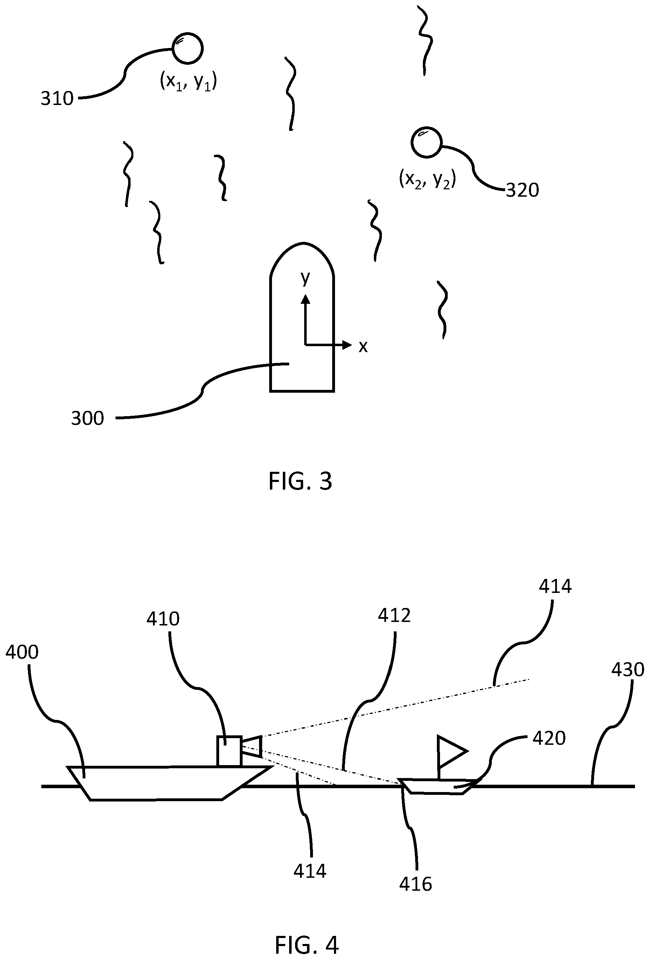

A goal of the present method is to calculate a surface location of the object. The surface location can be relative to the USV or absolute (e.g. compliant with a global geolocation standard). FIG. 3 exemplarily shows a USV (300) from a top view. In this view, the surface locations can be indicated in, for example, a 2D coordinate system (x,y). Two objects 310, 320 are shown, having locations (x1, y1) and (x2, y2) respectively. In this example, a reference point in the USV 300, for example the centre or the front tip, can be defined as the origin (0,0), see the x-y coordinate system indicated in FIG. 3. The locations (x 1, y1), (x2, y2) can therefore indicate the relative locations of the objects with respect to the USV 300. In another embodiment, the location is represented by distance and direction of the objects with respect to the USV 300.

Back to FIG. 2, step 204 relates to acquiring parameters which will be used in the calculation step 208 for calculating the surface location of the object. The parameters comprise an orientation of the imaging device. In maritime environment, marine vehicles are subject to the movement of the water which is constantly changing. Therefore, the orientation of the imaging device mounted on an USV can change in time. Therefore, the orientation of the imaging device at the time of acquisition of the 2D image with objects is used to reconstruct the physical (location, orientation) situation at the time of the image acquisition. The parameters can also include other parameters such as ROV parameters, imaging device parameters such as focal length, sensor size, resolution, aperture size, field of view, calibration parameters, exposure settings, zoom level, 3D location. The physical situation of the imaging device can also be indirectly obtained from parameters related to the USV. Any relevant parameters suitable for retrieving physical situation at the time of the imaging acquisition can be acquired in this step.

Although FIG. 2 shows step 204 as a separate acquisition step, referring to e.g. the acquisition of orientation parameters from an IMU, in other or in combined embodiments the parameters relating to orientation can be acquired from the 2D image, e.g. based on recognizing the horizon in the image. Thus, in embodiments, the acquired 2D image can be fed to step 204.

Step 206 relates to processing the 2D image to identify at least one pixel of interest in the 2D image, wherein the at least one pixel of interest is indicative of the object. For example, such pixel(s) of interest can be the interface between the object and the sea water facing the imaging device. This interface is a useful indicator of how far the object is from the imaging device, hence the USV. An example is shown in FIG. 4. FIG. 4 shows a USV 400 at sea surface 430, having a 2D imaging device 410 acquiring images with a field of view indicated by dashed lines 414. An object 420, such as another vessel, is located at a distance from the USV. Inside the field of view 414, at least one pixel is related to the interface 416 between the object 420 and the sea surface 430. A ray 412 is annotated to illustrate a ray connected the interface 416 and the imaging device 410.

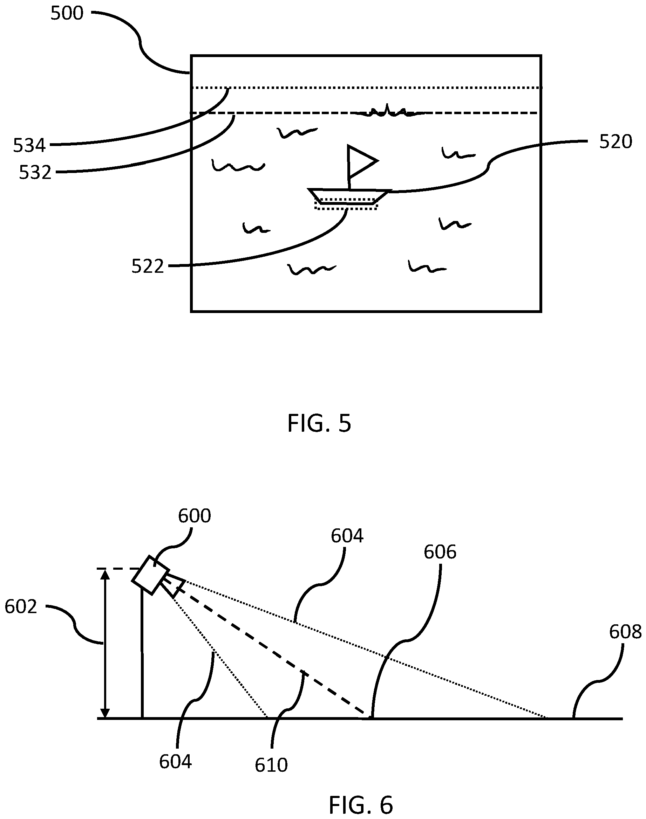

An example of the 2D image 500 is shown in FIG. 5. In FIG 5, an object 520 is captured by the 2D image 500. Since the sea water is relatively straightforward to identify using any known method in the art, which is known to anyone skilled in the art, the interface between the object 520, particularly the interface facing the USV (not shown) can be identified. The identified pixel(s) of interest is illustrated with a dotted box 522. These pixels then can be assumed to be at the same height as the water surface, and with this assumption, the distance from the imaging device can be calculated together with additional information related to the imaging device which is recited more specifically in step 208.

In an embodiment, the identified pixel(s) of interested in the dotted box 522 are tracked over multiple frames, such that an average height of the pixels in the 2D image 500 can be established. In this manner, the movement of the object 520 on the water surface due to e.g., waves, can be tracked, and a more accurate assumption of the height of the water surface can be made. Equally, in the event of a static object 520, such as an offshore structure, lighthouse, or land, can be monitored over time to adjust for wave height in relation to the object.

The acquired horizon 532 is shown by a dotted line. In a calibration step, it was established that a camera mounted on the USV, when the USV would be in a horizontal orientation without being influenced by heaving, would capture the horizon at position 534. The calibrated horizon can be obtained for different focal point settings of the camera.

The acquired horizon 532 is acquired at a position lower than the calibrated horizon. From the acquired 2D image it can be determined that the camera is heaving backwards, resulting in the camera acquiring an image while directed somewhat more upwards with the horizontal. Objects detected, such as object 522, will appear closer and the respective distance from the USV is actually larger than an object identified at the same pixels when the horizon would be at the calibrated position 534. By determining the distance between acquired horizon 532 and calibrated horizon 534, corrected angles can be obtained and the actual distance to the object can be calculated.

Turning back to FIG. 2, step 208 relates to calculating surface location of the object based on the at least one pixel of interest and the parameters. If the height of the imaging device relative to the sea surface is more or less known and constant, an additional piece of information related to the orientation of the imaging device can be used to determine the location of the identified pixel(s) of interest in real world. Fig. 6 illustrates such approximated process. An imaging device 600 is shown, located at a height distanced from the sea surface 608 about a height 602. The USV is not illustrated here. The camera is oriented to a direction such that it forms a field of view as indicated with the dashed lines 604. Within the field of view 604, there is the interface 606 which is obtained from the step 206.

A ray-tracing technique such as the pinhole camera model, or any other suitable technique known in the art, can be used to trace the ray 610 connecting the interface 606 and the imaging device 600 to calculate how far the interface 606 is from the imaging device 600 in real world.

The orientation information can be acquired using an IMU installed at least near the imaging device 600 of the USV to which the imaging device 600 is fixed to. Alternatively, the location and orientation information can be obtained solely from a positioning means adjacent the imaging device 600.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. A method for providing navigation parameters for navigation of an uncrewed surface vessel (USV) at sea, wherein the navigation parameters comprise a surface location of an object at sea, wherein the surface location of the object is defined with respect to a surface location of the USV, the method comprising the steps of:
- acquiring a 2D image of the object using an imaging device of the USV;
- acquiring parameters comprising an orientation of the imaging device;
- processing the 2D image to identify at least one pixel of interest in the 2D image, wherein the at least one pixel of interest is indicative of the object;
- calculating the surface location of the object based on the at least one pixel of interest and the parameters.

2. The method of claim 1, wherein the calculating the surface location of the object comprises calculating relative direction and distance of the object with respect to the surface location of the USV.

3. The method of any of the preceding claims, wherein the method further comprises the steps of:
- acquiring ROV parameters comprising at least one parameter related to a remotely operated vehicle (ROV) deployed from the USV as a part of the navigation parameters,

4. The method of any of the preceding claims, wherein the acquiring of the parameters comprises
- acquiring at least one property of the imaging device selected from focal length, sensor size, resolution, aperture size, field of view, calibration parameters, exposure settings, and zoom level,
and/or
- acquiring a 3D location of the imaging device,
and/or
- acquiring a pitch, a yaw and/or a roll of the imaging device relative to the surface of the sea or relative to the USV.

5. The method of any of the preceding claims, wherein the acquiring of the parameters further comprises acquiring USV orientation parameters or acquiring the surface location of the USV.

6. The method of claim 5, wherein the calculating the surface location of the object comprises calculating the surface location of the object in accordance to satellite navigation system format and outputting, e.g. transmitting, the surface location of the object in accordance with the satellite navigation system format.

7. The method of any of the preceding claims, wherein the processing comprises identifying the at least one pixel of interest in the 2D image, wherein the at least one pixel of interest is indicative of an interface between the object and the surface of the sea.

8. The method of any of the preceding claims, wherein the method further comprises navigating the USV in view of the calculated surface location of the object.

9. The method of claim 8, wherein the navigating further comprises navigating in view of navigational rules.

10. The method of any of previous claims, wherein the method further comprises:
- acquiring surface traffic parameters; and
- navigating in view of the surface traffic parameters.

11. The method of claim 10, wherein the acquiring surface traffic parameters comprises acquiring a set of traffic information related to at least one of:
- weather conditions; or
- externally provided traffic information.

12. An uncrewed surface vessel (USV) for autonomous navigation comprising:
- a memory;
- a processor;
- an imaging device configured to acquire a 2D image of an object;
- a control unit configured to acquire parameters comprising an orientation of the imaging device, and configured to navigate the USV;
- a processing unit configured to process the 2D image to identify at least one pixel of interest in the 2D image, wherein the at least one pixel of interest is indicative of an object at sea, wherein the processing module is further configured to calculate a surface location of the object based on the at least one pixel of interest, and the parameters.

13. The USV of claim 12, wherein the processing unit is further configured to calculate a relative direction and a distance of the object with respect to the surface location of the USV.

14. The USV of claims 12 or 13, wherein the control unit is further configured to acquire ROV parameters comprising at least one parameter related to a remotely operated vehicle (ROV) deployed from the USV as navigation parameters.

15. The USV of any of the claims 11-14, wherein the control unit is configured to navigate the USV in view of the calculated surface location of the object and/or configured to acquire surface traffic parameters and to navigate further in view of the surface traffic parameters.
